# EUROPÄISCHE PATENTSCHRIFT

(11) **EP 2 845 484 B1**
(45) Veröffentlichungstag und Bekanntmachung des Hinweises auf die Patenterteilung: **02.08.2017**
(21) Anmeldenummer: 14183536.3
(22) Anmeldetag: 04.09.2014
(51) Int. Cl.: A21D 15/02, A21D 17/00, A21D 13/32

(54) **Gefülltes Sandwich**
Filled sandwich
Sandwich garni

(30) Priorität: 06.09.2013 DE 102013109793
(43) Veröffentlichungstag der Anmeldung: 11.03.2015
(73) Patentinhaber: Hochland SE, 88178 Heimenkirch (DE)
(72) Erfinder: Kavalirek, Klaus, 88099 Neukirch (DE); Milz, Irmgard, 88178 Heimenkirch (DE)
(74) Vertreter: Braun-Dullaeus Pannen Patent- und Rechtsanwälte

(56) Entgegenhaltungen:
- WO-A1-03/003839
- WO-A1-03/009691
- DE-A1- 19 943 506
- FR-A1- 2 986 694
- US-A- 4 091 720
- US-A1- 2006 073 246
- US-A1- 2007 144 359

## Beschreibung

Die Erfindung betrifft "Conveniencefood" in Form eines industriell vorgefertigten industriell vorgefertigten gefüllten Sandwichs zum späteren Rösten in aufgestellter Position in einem Toaster durch einen Endverbraucher aufweisend zwei aufeinander liegende Brotscheiben und eine zwischen den Brotscheiben in einem zentralen Bereich eingebrachte Zutat, umfassend beispielsweise ein Käseprodukt. Dabei sind die Randbereiche der beiden aufeinander liegenden Brotscheiben unter Druckbeaufschlagung und unter Vermittlung eines lebensmittelkonformen Bindemittels miteinander zu einer Verpressung verpresst, wobei diese Verpressung das Auslaufen der Zutat bei Aufstellung des Sandwichs verhindert.

Im Rahmen dieser Anmeldung werden unter dem Begriff "gefülltes Sandwich" alle Arten von belegten Broten verstanden werden, die zwei in etwa parallel zueinander angeordnete Brotscheiben (im Folgenden Sandwichscheiben genannt) und dazwischen wenigstens eine wertbestimmende Zutat aufweisen, unabhängig davon welche Art von Brot für deren Herstellung verwendet wird. Wertbestimmende Zutaten sind insbesondere Käse, beispielsweise in Form von Scheiben, Wurst- und/oder Schinkenscheiben und/oder Gemüse und/oder Pilzzubereitungen.

Es versteht sich, dass weitere scheibenförmige Zutaten auch in Form von Gurkenscheiben, Tomatenscheiben, Eischeiben etc. sowie körnige, flüssige oder pastöse Zutaten (Gewürze, Saucen, Meerrettich, Senf, Butter in cremiger Form etc.), zwischen die Sandwichscheiben eingebracht sein können. Scheibenförmige und körnige Zutaten sind dabei mit Vorteil auf die jeweils erste Sandwichscheibe aufgebracht, während flüssige oder pastöse Zutaten, je nach Menge unter Umständen auch auf die zweite Sandwichscheibe aufgebracht sein können, ehe diese mit ihrer die pastöse bzw. flüssige Zutat aufweisenden Seite dann auf die erste Sandwichscheibe gelegt wurde.

Solche Convenience Produkte in Form industriell vorgefertigter gefüllten Sandwichs sind beispielsweise aus der WO 03/009691 A1 und der DE 23 53 905 bekannt. Diese Sandwichs weisen flächige Verpressungen auf, die erfahrungsgemäß nicht sicher verhindern können, dass beim letztendlichen Toasten durch den Endverbraucher die Zutaten zwischen den Sandwichscheiben herausdringen und den Toaster verunreinigen. Derartige Produkte werden vom Endverbraucher wegen der unkomfortablen Handhabung und der mitunter wenig ansprechenden Ästhetik nicht gut angenommen.

Die US 2007/144359 A1 zeigt einen Sandwichtoaster für den Haushaltsgebrauch, mit dem zwei aufeinandergelegte Toastbrotscheiben zu einem Sandwich mit stufigem Dichtrand verpresssend getoastet werden. Auch die US 4 091 720 A1 zeigt einen Haushalts Sandwichtoaster.

Aufgabe der vorliegenden Erfindung ist es nunmehr, ein industriell vorgefertigtes Sandwich Produkt zum späteren Rösten in aufrechter Stellung zu schaffen, das dichte Verpressungen hat und mit seiner verbesserten Dichtigkeit den Anforderungen des Endverbrauchers an den Verarbeitungskomfort und die Ästhetik genügt.

Diese Aufgabe wir durch ein Sandwich mit den Merkmalen des Anspruch 1 gelöst. Vorteilhafte Ausführungsformen sind in den Unteransprüchen genannt.

Die Besonderheit des erfindungsgemäßen Sandwichs liegt zum einen darin, dass das Bindemittel eine entlang der Randbereiche aufgesprühte wässrige Eiweißlösung ist. Zum anderen sind die Ränder der beiden aufeinander liegenden Sandwichscheiben im Rahmen der industriellen Vorfertigung unter gezielter Druckbeaufschlagung und unter Vermittlung eines lebensmittelkonformen Bindemittels derart miteinander verpresst und dadurch verklebt worden, dass die Verpressung zwei verschränkt gegeneinander liegende Dichtlippen innerhalb der Krume ausbildet.

Die erfindungsgemäße Verpressung ist vorteilhafterweise dadurch entstanden, dass im Randbereich beim Verpressen zwei zueinander beabstandete umlaufende Linien mit höherem Druck beaufschlagt wurden, so dass sich im verbundenen Randbereich zwei nebeneinander um den zentralen Bereich des Sandwichs umlaufende Linien festerer Verbindung und höherer Dichte ergeben. Diese Linien wirken dann wie verschränkt gegeneinander liegende Dichtlippen und verhindern in besonderem Maße beim späteren Toasten der gefüllten Sandwichs, dass Zutaten austreten. Dabei wurde die Stärke der Druckbeaufschlagung abhängig von der Brotsorte und der Zutat eingestellt, um eine ausreichende Dichtheit zu erhalten.

Demnach sind die Sandwichscheiben, nachdem sie zu einem Sandwich zusammengefügt sind, in ihren Randbereichen durch gezieltes Aufbringen von Druck und insbesondere auch von Hitze fest und derart flüssigkeitsdicht miteinander verbunden, dass ein Auslaufen der Zutaten bei einem späteren Toasten nahezu komplett verhindert wird. Dabei wird als Randbereich jener Bereich verstanden, der einen mit der Zutat versehenen zentralen Bereich eines Sandwichs umgibt. Auf diese Weise erhält man ein gefülltes Sandwich, das kurz vor dem Verzehr erhitzt werden kann, ohne dass Zutaten von innen aus dem Sandwich austreten können. Insbesondere eignen sich diese Sandwichs auch um vor dem Verzehr in einem herkömmlichen Toaster aufrecht stehend getoastet und auf diese Weise erhitzt zu werden.

Die erfindungsgemäß entlang der Randbereiche aufgesprühte wässrige Eiweisslösung enthält vorteilhafterweise Hühnereiweiß und/oder Molke und/oder Milch und/oder Magermilch, insbesondere in konzentrierter Form. Bevorzugt wird als wässrige Eiweißlösung konzentrierte Magermilch eingesetzt.

Um ästhetisch anspruchsvolle und gut verpackbare gefüllte Sandwichs zu erhalten, ist vorteilhaft vorgesehen, dass äußerste, unsaubere Ränder des gefüllten Sandwichs abgetrennt sind, so dass ein versäubertes Sandwich resultiert. Das vollständige Abtrennen der den Rand der Brotscheiben umgebende Kruste kann auf einfache Weise durch Stanzen erfolgt sein. Sollten die Brotscheiben nicht schon von Vornherein zumindest annährend miteinander deckungsgleich aufeinander liegen, so ist eine solche Deckungsgleichheit nun vorhanden. Insgesamt ist eine Deckungsgleichheit für die Ästhetik und die den spätere Verzehr vorbereitende Fertigstellung vorteilhaft.

Nicht nur für die Ästhetik des dem Endkunden angebotenen Produktes sondern auch zur Beschleunigung der späteren Zubereitung durch Toasten ist es vorteilhaft, wenn während des industriellen Herstellungsprozesses eine Vorröstung des Sandwichs zur Erzeugung einer ersten Oberflächenbräunung stattfindet. Diese Vorröstung hat den lebensmittelchemischen Vorteil, dass sie zu einer Pasteurisierung und damit zu einer Haltbarmachung insbesondere auch der milchhaltigen Zutaten führt. Vorteilhafterweise werden die Zutaten durch eine Nachröstung pasteurisiert. Für das spätere Toasten durch den Endverbraucher werden nur noch wenige, beispielsweise vier Minuten benötigt.

In einer weiteren vorteilhaften Ausführungsform weist das erfindungsgemäße Sandwich in die Oberflächen eingepresste Stabilisierungsrillen auf. Diese dienen nicht nur zur Stabilisierung der äußeren Form, sondern in gewisser Weise auch zur Fixierung der Zutaten im Inneren des Sandwichs.

Vorteilhafterweise liegen die Sandwichs dem Kunden gekühlt, insbesondere tiefgekühlt, zum Angebot vor.

Eine besonders hohe Kundenattraktivität hat das Sandwich als Convenience Produkt, wenn es in wenigen, insbesondere in zwei Stücken, in einer gemeinsamen Verpackung, beispielsweise einer Faltschachtel oder einem Karton, insbesondere tiefgekühlt angeboten wird. Ein solches Doppelpack bietet sich an, weil die meisten Toaster zwei Schlitze zum gleichzeitigen Toasten aufweisen.

Weitere Merkmale und Vorteile ergeben sich aus der nachfolgenden Beschreibung anhand der Figuren. Es zeigen:
- **Figur 1**: ein Sandwich in Draufsicht und
- **Figur 2**: ein aufgeschnittenes Sandwich.

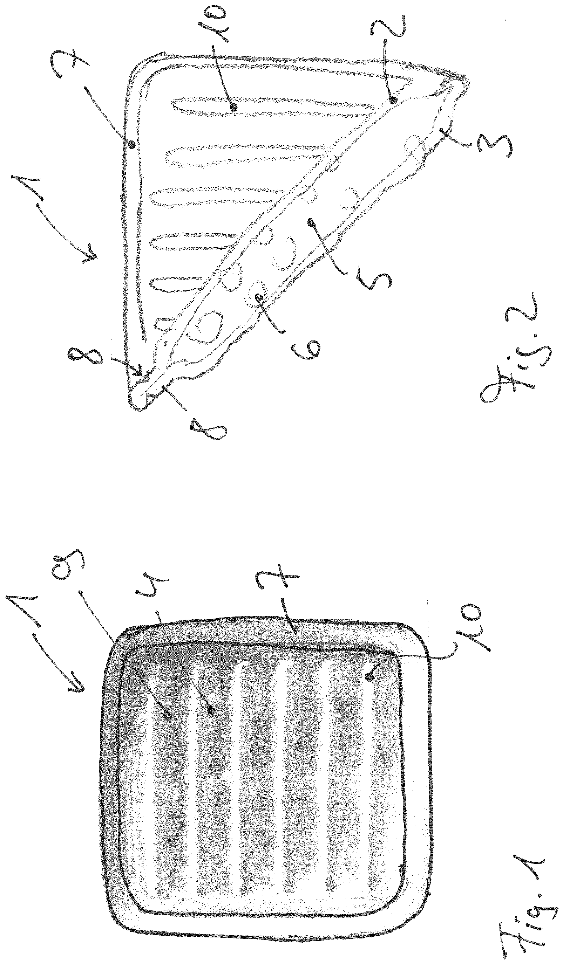

Figur 1 zeigt ein industriell vorgefertigtes gefülltes Sandwich 1 zum späteren Rösten durch den Endverbraucher in einem handelsüblichen Toaster. Wie aus Figur 2 ersichtlich, weist das Sandwich zwei aufeinander liegende Brotscheiben 2 und 3 auf, wobei in einem zentralen Bereich 4 zwischen den Brotscheiben eine Zutat umfassend ein Käseprodukt 5 und Schinkenstückchen 6 eingebracht ist. Die Ränder der Brotscheiben sind in einem umgebenden Randbereich 7 unter Druckbeaufschlagung und unter Vermittlung eines lebensmittelkonformen Bindemittels miteinander zu einer Verpressung verpresst, um bei Aufstellung des Sandwichs das Auslaufen der Zutat zu verhindern. Die Verpressung im Randbereich bildet zwei verschränkt gegeneinander liegende Dichtlippen 8 aus. Wie aus Figur 2 ersichtlich, zeigt der Schnitt durch den Randbereich einen etwa "N"-förmigen Verlauf der etwas weniger stark verdichteten Krume, der sich aus den parallel bebstandeten, jeweils von oben und von unten eingebrachten Siegellinien höherer Dichte ergibt. Mit dem solchermaßen abgedichteten Randbereich lässt sich das Sandwich in aufgestellter Position toasten.

Wie aus Figur 1 ersichtlich, liegen die Brotscheiben deckungsgleich aufeinander, wobei die den Rand der Brotscheiben umgebende Kruste vollständig entfernt ist. Ersichtlich erfolgte eine Vorröstung zur Erzeugung einer ersten Oberflächenbräunung 9. Zudem sind in die Oberflächen Stabilisierungsrillen 10 eingepresst, die das Verlaufen der Zutat beim Toasten behindern und somit zur Dichtigkeit beitragen.

## Patentansprüche

1. Industriell vorgefertigtes gefülltes Sandwich (1) zum späteren Rösten in aufgestellter Position in einem Toaster durch einen Endverbraucher aufweisend zwei aufeinander liegende Brotscheiben (2,3) und eine zwischen den Brotscheiben in einem zentralen Bereich eingebrachte Zutat (5,6) umfassend ein Käseprodukt, wobei die Randbereiche (7) der beiden aufeinander liegenden Brotscheiben (2,3) unter Druckbeaufschlagung und unter Vermittlung eines lebensmittelkonformen Bindemittels miteinander zu einer Verpressung verpresst sind, die bei Aufstellung des Sandwichs (1) das Auslaufen der Zutat (5,6) verhindert,
**dadurch gekennzeichnet,**
**dass** das Bindemittel eine entlang der Randbereiche aufgesprühte wässrige Eiweißlösung ist,
**dass** die Verpressung zwei nebeneinander um den zentralen Bereich des Sandwichs umlaufende Linien festerer Verbindung und höherer Dichte ergibt, die zwei verschränkt gegeneinander liegende Dichtlippen (8) ausbilden.

2. Sandwich nach Anspruch 1,
**dadurch gekennzeichnet,**
**dass** die Verpressung mittels Druck- und Hitzebeaufschlagung erzeugt ist.

3. Sandwich nach Anspruch 1 oder 2,
**dadurch gekennzeichnet,**
**dass** die Brotscheiben (2,3) deckungsgleich aufeinander liegen und die den Rand der Brotscheiben (2,3) umgebende Kruste vollständig entfernt ist.

4. Sandwich nach einem der vorherigen Ansprüche,
**dadurch gekennzeichnet**
**dass** es mittels Vorröstung eine erste Oberflächenbräunung aufweist und/oder dass seine Zutaten mittels Nachröstung pasteurisiert sind.

5. Sandwich nach Anspruch 1,
**dadurch gekennzeichnet,**
**dass** das Bindemittel Hühnereiweiß und/oder Molke und/oder Milch und/oder Magermilch in insbesondere konzentrierter Form enthält.

6. Sandwich nach einem der vorherigen Ansprüche,
**gekennzeichnet durch**
in die Oberflächen eingepresste Stabilisierungsrillen (10).

7. Convenience Lebensmittelprodukt umfassend zwei Sandwiches nach den vorherigen Ansprüchen, die in einer gemeinsamen Verpackung, insbesondere in einer Faltschachtel, als Doppelpack angeboten werden.

8. Lebensmittelprodukt nach Anspruch 7,
**dadurch gekennzeichnet,**
**dass** es dem Endverbraucher in gekühltem Zustand zum Angebot steht.

## Claims

1. An industrially preassembled filled sandwich (1) for later toasting by an end consumer in an erect position in a toaster, having two slices of bread (2, 3) lying on one another and an ingredient (5, 6) comprising a cheese product introduced in a central region between the slices of bread, wherein the edge regions (7) of the two slices of bread (2, 3) are lying on one another being are compressed with one another under pressure loading and with the placement of a food-grade binding agent to form a compressed product, which prevents the ingredient (5, 6) from running out when the sandwich (1) is erected,
**characterized**
**in that** the binding agent is an aqueous albumen solution which is sprayed on along the edge regions,
**in that** the compression results in two adjacent lines surrounding the central region of the sandwich of stronger connection and higher leak tightness, which lines form two sealing lips (8) which abut one another in an interlocked manner.

2. The sandwich according to Claim 1,
**characterized**
**in that** the compressed product is created by means of loading with pressure and heat.

3. The sandwich according to Claim 1 or 2,
**characterized**
**in that** the slices of bread (2, 3) lie on one another congruently and the crust surrounding the edge of the slices of bread (2, 3) is removed completely.

4. The sandwich according to one of the preceding claims,
**characterized**
**in that** the sandwich exhibits a first surface browning by means of toasting and/or in that the ingredients of the sandwich are pasteurized by means of re-toasting.

5. The sandwich according to Claim 1,
**characterized**
**in that** the binding agent contains chicken egg white and/or whey and/or milk and/or skimmed milk in a particularly concentrated form.

6. The sandwich according to one of the preceding claims,
**characterized by**
stabilizing grooves (10) pressed into the surfaces.

7. A convenience food product comprising two sandwiches according to the preceding claims, which are offered as a double pack in a common package, particularly in a folding carton.

8. The food product according to Claim 7,
**characterized**
**in that** the food product is available to the end consumer in a cooled state.

## Revendications

1. Sandwich (1) garni de préfabrication industrielle, destiné à être grillé ultérieurement en position debout dans un grille-pain par un consommateur final, comportant deux tranches de pain superposées (2, 3) et un ingrédient (5, 6) inséré dans la région centrale entre les tranches de pain, comprenant un produit à base de fromage, les régions du bord (7) des deux tranches de pain (2, 3) superposées étant comprimées ensemble sous application d'une pression et sous ajout d'un agent liant à compatibilité alimentaire en un scellement qui lors du placement debout du sandwich (1) empêche l'écoulement de l'ingrédient (5, 6),
**caractérisé en ce que**
l'agent liant est une solution aqueuse de protéine, vaporisée le long des régions du bord,
**en ce que** la compression donne lieu à deux lignes d'assemblage plus serré et de densité plus élevée entourant côte à côte la région centrale du sandwich, qui forment deux lèvres d'étanchéité (8) adjacentes imbriquées.

2. Sandwich selon la revendication 1,
**caractérisé en ce que** la compression est créée par application d'une pression ou de chaleur.

3. Sandwich selon la revendication 1 ou 2,
**caractérisé en ce que** les tranches de pains (2, 3) sont superposées en coïncidence et **en ce que** la croûte qui entoure le bord des tranches de pain (2, 3) est entièrement retirée.

4. Sandwich selon l'une quelconque des revendications précédentes,
**caractérisé en ce qu'**il présente un premier brunissement de surface obtenu par grillage préliminaire et/ou **en ce que** ses ingrédients sont pasteurisés par grillage ultérieur.

5. Sandwich selon la revendication 1,
**caractérisé en ce que** l'agent liant est du blanc d'oeuf et/ou du lactosérum et/ou du lait et/ou du lait écrémé, dans la forme notamment concentrée.

6. Sandwich selon l'une quelconque des revendications précédentes,
**caractérisé par** des cannelures de stabilisation (10) gaufrées dans les surfaces.

7. Produit alimentaire de commodité, comprenant deux sandwichs selon l'une quelconque des revendications précédentes qui sont proposés en tant que double-pack sous emballage commun, notamment dans une boîte pliante.

8. Produit alimentaire selon la revendication 7,
**caractérisé en ce qu'**il est proposé au consommateur final à l'état réfrigéré.
